# EUROPEAN PATENT SPECIFICATION

(11) **EP 3 834 907 B1**
(45) Date of publication and mention of the grant of the patent: **15.11.2023**
(21) Application number: 20210738.9
(22) Date of filing: 30.11.2020
(51) Int. Cl.: B01D 45/12, B01D 45/16, B01D 46/00, B01D 46/10, B01D 50/00

(54) **APPARATUS FOR FILTERING OILY MISTS**
VORRICHTUNG ZUR FILTRIERUNG VON ÖLNEBEL
APPAREIL DE FILTRAGE DE BROUILLARDS D'HUILE

(30) Priority: 10.12.2019 IT 201900023427
(43) Date of publication of application: 16.06.2021
(73) Proprietor: Metal Working S.r.l., 38057 Pergine Valsugana, TN (IT)
(72) Inventor: GARDUMI, Alessandro, 38123 TRENTO, FRAZIONE ROMAGNANO TN (IT)
(74) Representative: Modiano, Micaela Nadia

(56) References cited:
- US-A- 5 480 464
- US-A1- 2002 066 366
- US-A1- 2012 297 740
- US-B1- 6 309 436

## Description

The present invention relates to an apparatus for filtering oily mists.

As is known, during industrial processes that use mixtures of oil and water for cooling and/or lubricating, such as for example turning, milling, pressure die-casting processes or others, oily mists tend to form in the work environment which are formed normally by oil particles with dimensions comprised between 1 µm and 10 µm.

To reduce the emissions of oily mists, filtering units are currently widely used which are based on the physical phenomenon known as "coalescence", by which the smallest droplets of a liquid scattered in a gas tend to join the bigger ones, forming larger aggregates which in turn tend then to fall by gravity. Such a filtering unit is disclosed in US 2012/297740 A1, US 6 309 436 B1, US 2002/066366 A1 and US 5 480 464 A.

In particular, known coalescence filtering units are provided by filtration towers constituted by an enclosure with a vertical axis, within which multiple filtration elements are arranged, mutually superimposed and each provided with a respective filtering medium, constituted by metallic straw or fiberglass fabric, through which a rising flow of air to be treated which crosses coaxially the filtration tower is forced to pass by an extractor.

Once the oily mist particles retained by the filtering medium of each filtration element have agglomerated by coalescence into larger particles, they have the tendency, because of their increased weight, to fall downward, so that they can be collected in a tub arranged at the bottom of the filtration tower.

However, when the extractor is activated and, therefore, the filtering unit is working, the agglomerated particles, in order to be able to fall, must overcome the rising action of the air, which tends instead to keep them adherent to the filtering medium, preventing in practice their collection on the bottom of the filtering unit for their evacuation.

It is clear from the above that the efficiency of the release of the oily mist particles by the filtering media of the various filtration elements is maximum when the filtering unit is off, i.e., when its filtration elements are not crossed by air, such as for example at the end of the working day.

In working situations where work is on multiple shifts or even round-the-clock, the filtering unit is unable to regenerate, since the collected oil cannot drip from the filtering media, which accordingly progressively continue to clog.

In order to obviate this problem, the filtering units designed to work in these particularly challenging situations are structured in separate modules, each constituted by a filtration tower provided with a respective plurality of filtration elements, so that at least one of the modules can be left inactive cyclically, so that it can regenerate by draining the oil collected during the extraction of the air from the environment, while the others are operating.

If instead the oily mist is polluted by solid particulate, even in low quantity, the oily mist aspirated and collected on the filtering medium, by mixing with the dust constituted by the solid particulate, creates a mix which can drip from the filtering medium only with difficulty.

In this situation, one of the solutions used to solve this problem is to increase the filtering surface in order to distribute the solid particulate over a broader area with, moreover, injections of pulverized water, in order to prevent the solid particles from adhering integrally to the filtering medium.

This solution entails, however, greater volumes and greater structural complexity.

Another solution that is used entails instead arranging, like a sieve, in the filtering unit, economically low-cost sacrificial filtration elements, which allow to reduce progressively the low-melting solid particles and/or gases, preserving the main filtration elements of greater value which have the task of separating the oily component.

The drawback of this solution is that it is necessary to cyclically remove and replace the sacrificial filtration elements during the periods in which the filtering unit is off or inactive.

The aim of the present invention is to provide an apparatus for filtering oily mists that is capable of improving the background art in one or more of the aspects mentioned above.

Within this aim, an object of the invention is to provide an apparatus for filtering oily mists that is capable of operating in a continuous manner, without requiring forced stop periods in order to restore its functionality, so as to be able to work more smoothly and efficiently than the background art.

Another object of the invention is to provide an apparatus for filtering oily mists which can continue to operate even on multiple work shifts or in a continuous cycle, 24 hours a day, without the need to provide additional filtration apparatuses as support, with consequent economic advantages.

Another object of the invention is to provide an apparatus for filtering oily mists that can require less maintenance and can offer, therefore, better functionality, even in presence of solid particulate, than the background art.

Yet another object of the invention is to devise an apparatus for filtering oily mists that is capable of giving the greatest assurances of reliability and safety in operation.

A further object of the present invention is to overcome the drawbacks of the background art in a manner that is alternative to any existing solutions.

Not least object of the invention is to provide an apparatus for filtering oily mists that is constructively simple to provide and can be provided at competitive costs.

This aim and these and other objects which will become more apparent hereinafter are achieved by an apparatus for filtering oily mists according to claim 1, optionally provided with one or more of the characteristics of the dependent claims.

Further characteristics and advantages of the invention will become more apparent from the description of preferred but not exclusive embodiments of the apparatus for filtering oily mists according to the invention, illustrated by way of non-limiting example in the accompanying drawings, wherein:

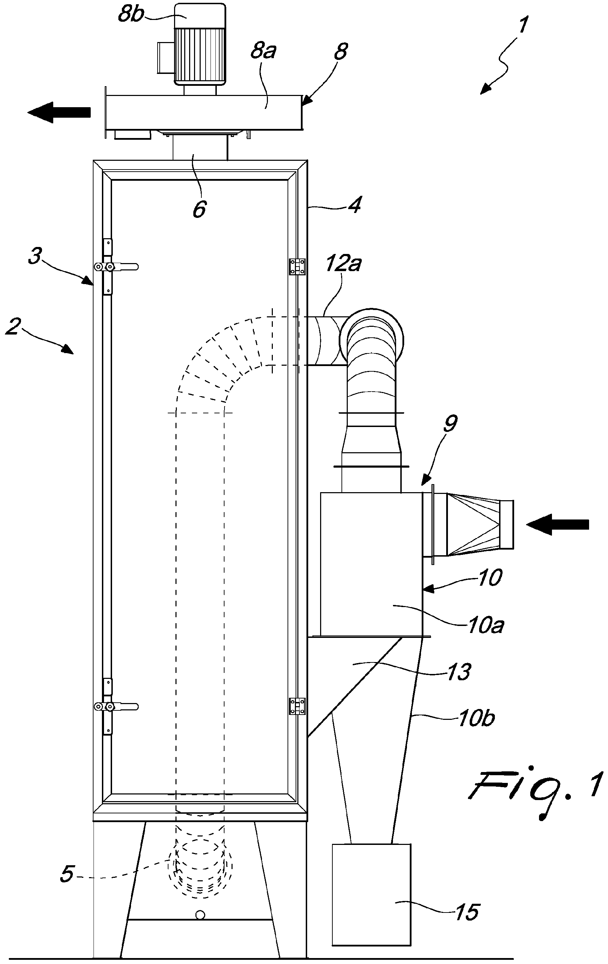

Figure 1 is a front elevation view of the apparatus according to the invention;

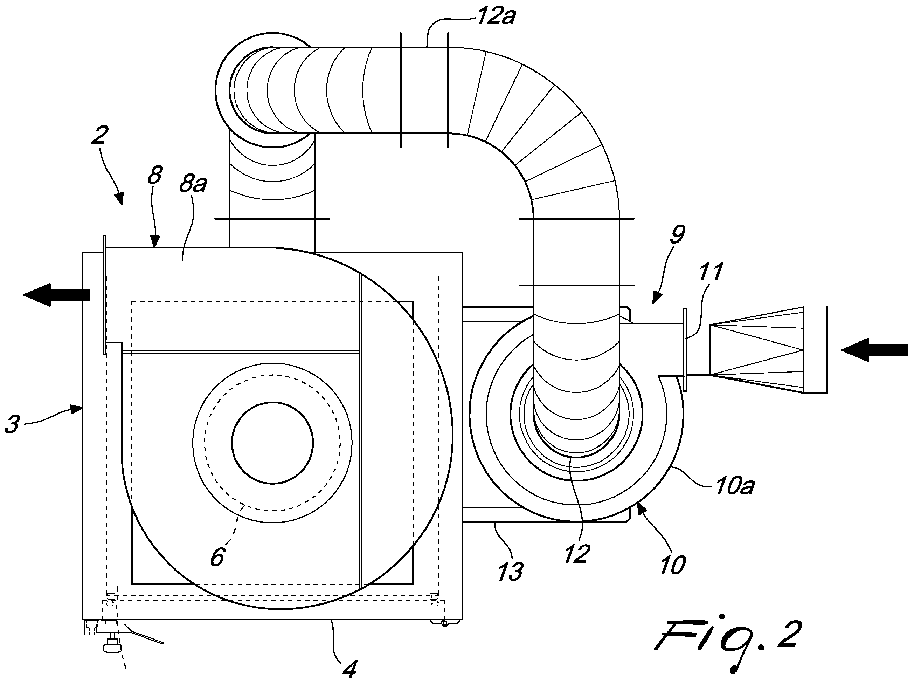

Figure 2 is a top plan view of the apparatus according to the invention, with parts omitted for the sake of simplicity;

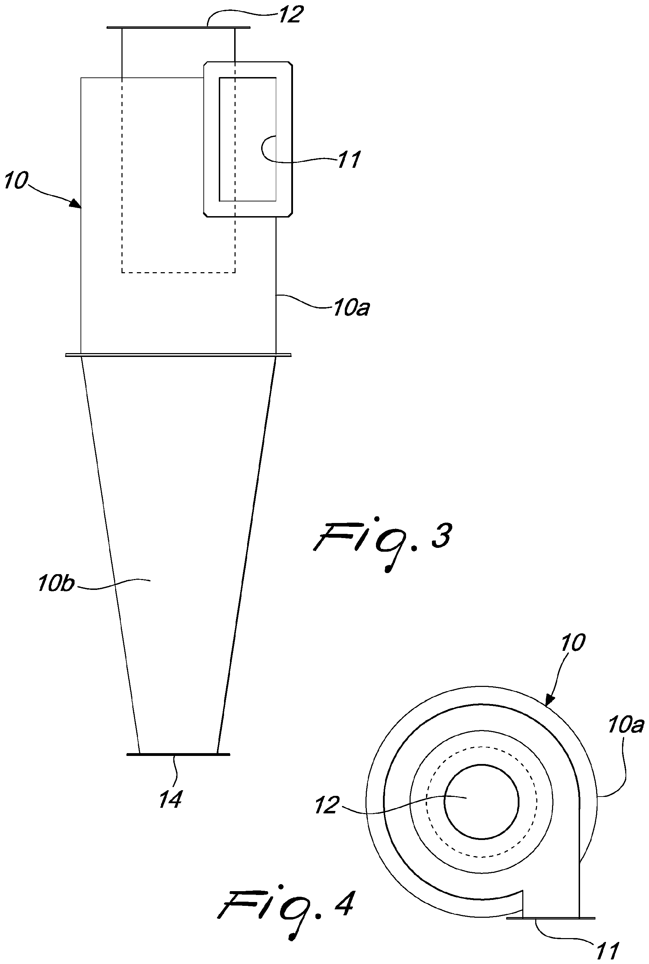

Figure 3 is a lateral elevation view of a cyclone condenser of the apparatus according to the invention;
Figure 4 is a top plan view of the cyclone condenser of Figure 3;

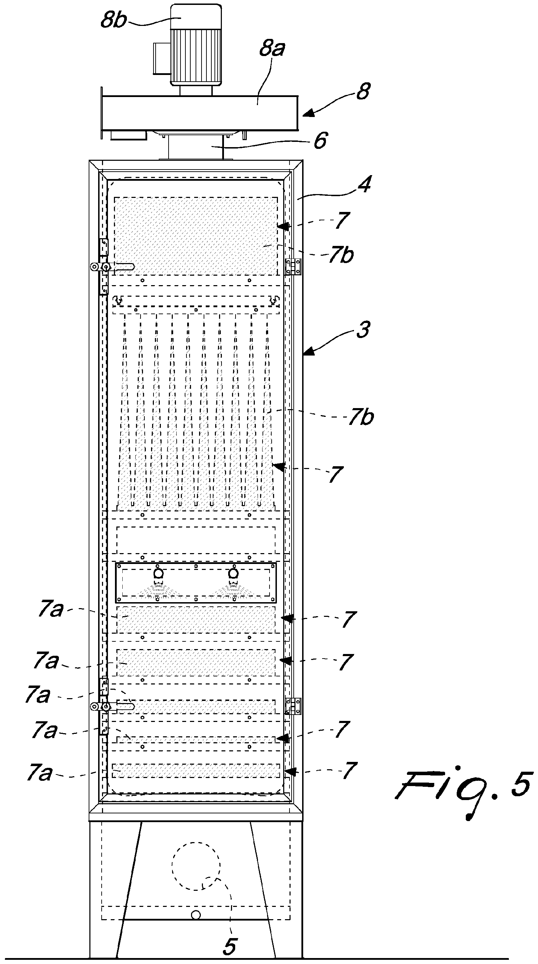

Figure 5 is a front elevation view, partially in phantom lines, of a filtration tower of the apparatus according to the invention, to show its interior;

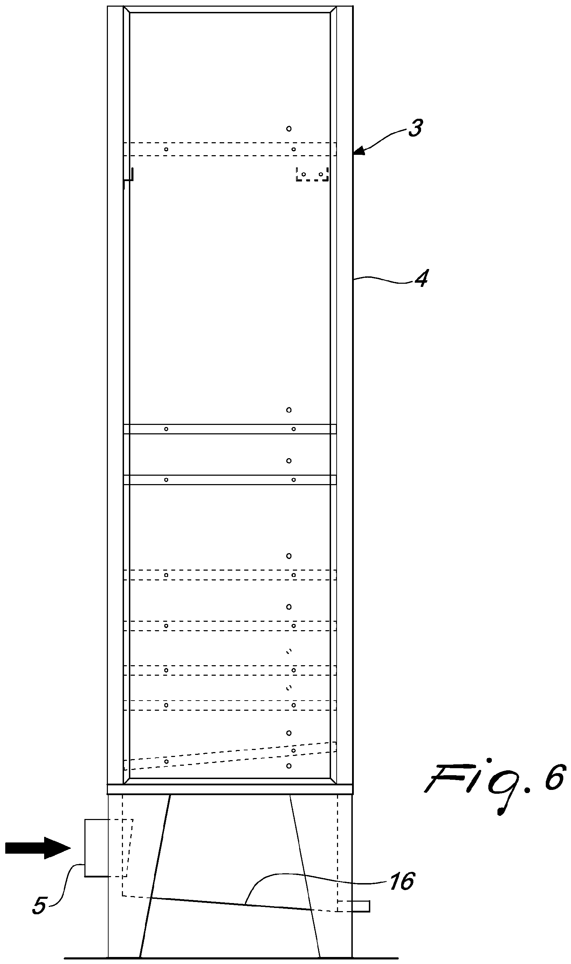

Figure 6 is a lateral elevation view, partially in phantom lines, of the filtration tower of Figure 5;

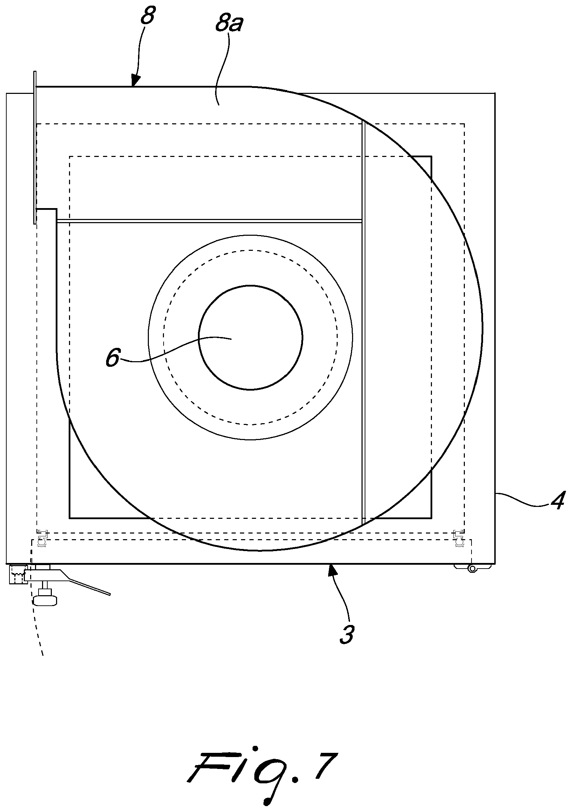

Figure 7 is a top plan view, partially in phantom lines, of the filtration tower of Figure 5;

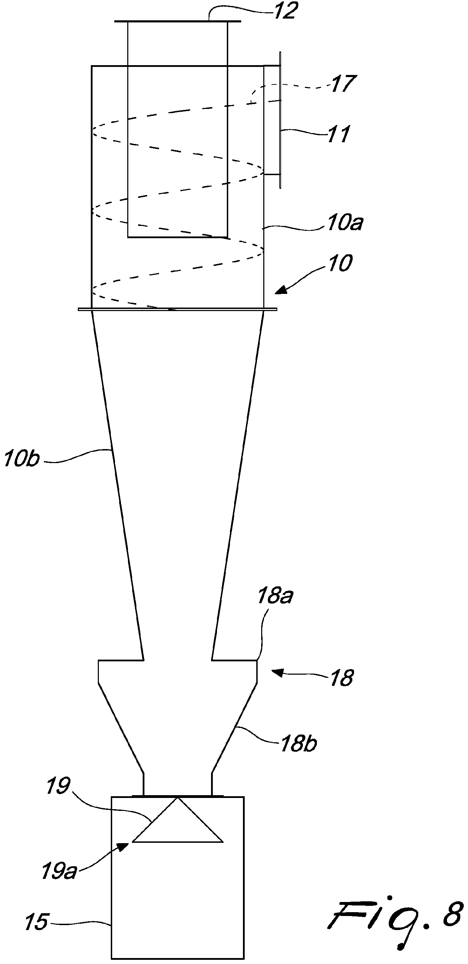

Figure 8 is a sectional schematic front elevation view, partially in phantom lines, of a possible embodiment of the cyclone condenser;
Figure 9 is a front view of a constructive variation of the apparatus according to the invention;
Figure 10 is a top plan view of the variation of Figure 9.

With reference to the figures, the apparatus for filtering oily mists according to the invention, generally designated by the reference numeral 1, comprises at least one filtration stage 2, which has at least one filtration tower 3 provided with an enclosure 4 with a substantially vertical axis.

The enclosure 4 of the filtration tower 3 has, in a lower region, an inlet 5 for the air to be filtered and, in an upper region, an outlet 6 for the filtered air.

Multiple mutually superimposed filtration elements 7 are accommodated inside the enclosure 4 and comprise, advantageously, coalescence filters 7a, preferably of a filtering medium made of metallic straw and, conveniently, one or more absolute filters 7b, preferably of the cartridge and/or pocket type.

Furthermore, means 8 for the forced generation of an air flow from the inlet 5 to the outlet 6 of the enclosure 4 are provided which allow the air to be filtered to pass through the filtration elements 7.

Conveniently, the means 8 for the forced generation of an air flow comprise an extractor 8a which communicates with the outlet 6 of the filtration tower 3 and is driven by an adapted motor 8b supported conveniently by the enclosure 4 of the filtration tower.

The particularity of the invention resides in that it comprises, upstream of the filtration stage 2, along the direction of the air flow produced by the forced generation means 8, at least one pre-filtration stage 9 which is provided with at least one cyclone condenser 10, which makes it possible to separate from the air to be treated a considerable portion of liquid and coarse dust.

Preferably, there is a single cyclone condenser 10 used to filter the entire flow of the air to be treated.

In particular, the cyclone condenser 10 is provided with an intake port 11, which communicates with the environment to be treated, in which the oily mist is generated, and with a discharge port 12, which in turn is connected to the inlet 5 of the filtration tower 3, for example by means of a pipe 12a with elbow bends.

The cyclone condenser 10 is arranged externally and, preferably in the immediate proximity, with respect to the enclosure 4 of the filtration tower 3.

Conveniently, the cyclone condenser 10 is directly supported by the same enclosure 4 of the filtration tower 3, by means of a bracket 13, which protrudes from the enclosure 4.

In greater detail, the cyclone condenser 10 has a hollow cylindrical body 10a, with a substantially vertical axis, which communicates in a lower region with a conical portion 10b with walls that converge downward.

In particular, the intake port 11 of the cyclone condenser 10 is arranged tangentially to and above the cylindrical body 10a, while the discharge port 12 is arranged upward and axially to the cylindrical body 10a.

At the lower end of the conical portion 10b of the cyclone condenser 10 there is, moreover, a discharge outlet 14 for the liquids separated from the air to be treated, which communicates with a first collection tub 15 of the apparatus.

Advantageously, according to one possible embodiment, the cyclone condenser 10 has, at least on the internal lateral wall of its cylindrical body 10a, at least one relief or recessed region 17, constituted by a rib or a groove, which unwinds in a spiral shape around the axis of the cylindrical body 10a and has the function of making the polluting particles contained in the air to be treated glide in a more direct and efficient way toward the discharge outlet 14 of the cyclone condenser 10.

Conveniently, the cyclone condenser 10 can have internally means for interrupting the continuity of pressure at least between its upper part and its lower part, which are, for example, constituted by a variation 18 of the transverse cross-section of the conical portion 10b which comprises, proceeding from the upper part toward the lower part of the cyclone condenser 10, a sudden widening 18a followed by a progressive narrowing 18b of the transverse cross-section.

Such means for interrupting the continuity of pressure make it possible to vary, in the lower part of the cyclone condenser 10, the cyclone flow to which the oily mist is subjected in the cyclone condenser with respect to its upper part, in order to make it more difficult for any particularly small particles that might reenter the ascending flow to rise.

Conveniently, barrier means 19 can be provided, moreover, inside the cyclone condenser 10 that make it possible to limit the rise, toward the discharge port 12, of particles that have settled but can be easily conveyed by the ascending flow that is generated in the cyclone condenser 10 and are, advantageously, provided by a cone-like or flat retention body 19a, arranged axially between the collection tub 15 and the means for interrupting the continuity of pressure.

Conveniently, on the bottom of the filtration tower 3 there is a second collection tub 16 in which the liquid separated from the air to be treated by the filtration elements 7 settles by gravity.

It should be noted that by virtue of the effective filtration action performed, the outlet 6 of the filtration tower 3 can be optionally connected to the same environment to be treated, if regulations allow this.

It should be noted that an important aspect is to ensure in the cyclone condenser 10 a lamination of the air flow specifically sized for treating oily mists or water vapor.

For this purpose, the manner in which the air reaches the intake port 11 of the cyclone condenser 10 is important, since oily mists formed by pollutant particles of different dimensions will require different laminations of the inlet flow and different inlet speeds.

Conveniently, means for the introduction of the flow defined by special geometric shapes for laminating the inlet air flow can therefore be added on the intake port 11 of the cyclone condenser 10, if oily mists with an extremely small dimension of the oil particles are treated.

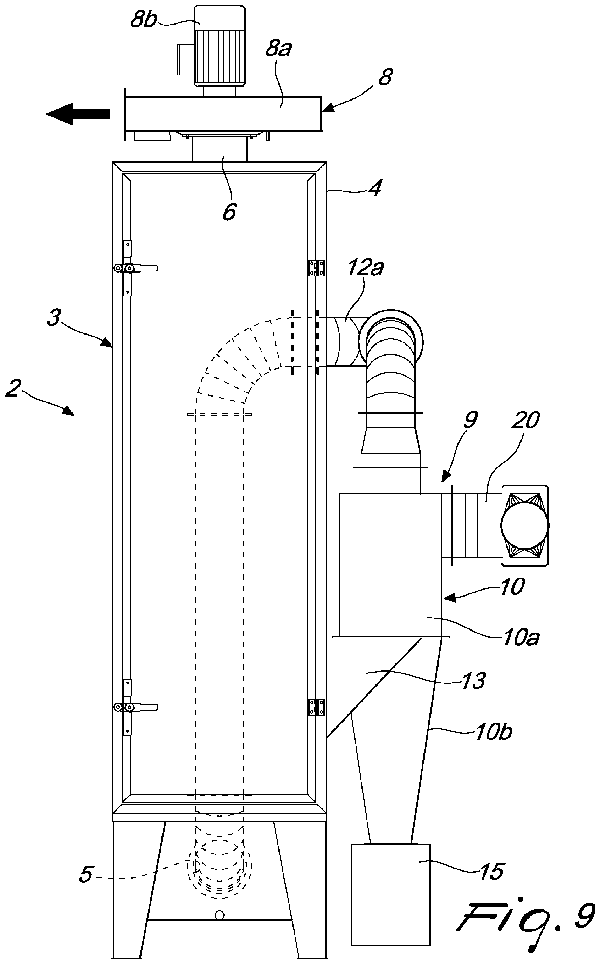

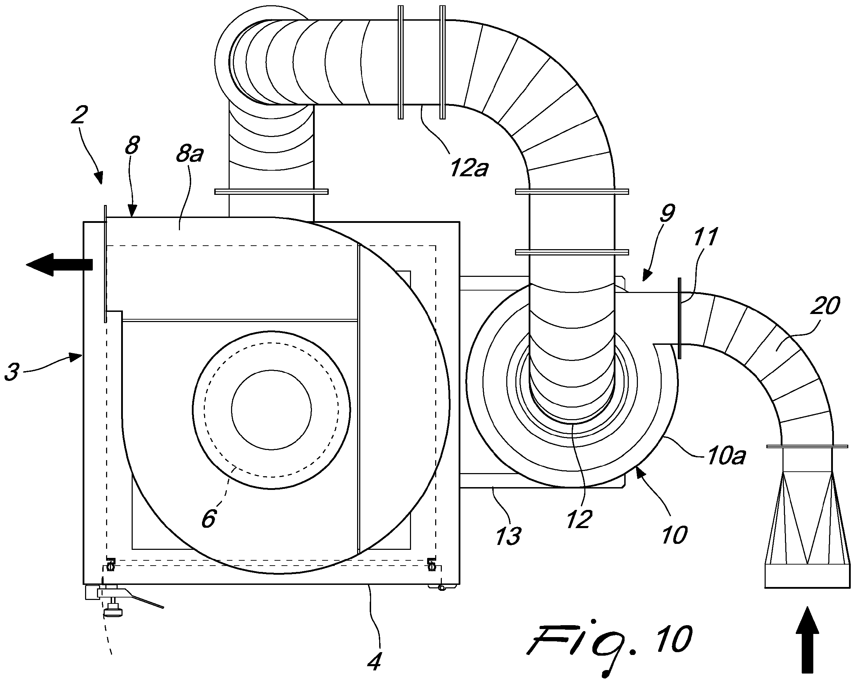

Advantageously, as in the constructive variation of Figures 9 and 10, said introduction means can be constituted by a portion of curved piping 20, which is joined to the intake port 11 of the cyclone condenser 10 and is extended on a plane that is substantially perpendicular to the axis of the cyclone condenser 10.

Such portion of curved piping 20 has a radius of curvature that is determined as a function of particulate flow rate and size characteristics.

In greater detail, with particles contained in the oily mists of small size, for an efficient cyclone condensation, a lower air flow rate at the inlet of the cyclone condenser 10 is required and this is obtained by sizing the intake port 11 and the diameter of the cyclone condenser 10 by means of a mathematical model known per se.

In some situations of particular oily mists with particles with very small dimensions, said sizing is not sufficient and a further refinement is necessary and can be achieved by inserting said portion of curved piping 20. The degrees of curvature of the portion of curved piping 20 that are necessary for an optimum variation of the lamination of the air flow at the intake port 11 of the cyclone condenser 10 can be calculated, by means of a known mathematical formula, as a function of the diameter and the curvature of the internal wall of the cyclone condenser, while the geometry of the intake port 11 determines the length of the portion of curved piping 20.

The operation of the apparatus, according to the invention, is as follows.

Once the extractor 8a has been activated, an air flow is generated which is drawn from the environment to be treated.

The drawn air is introduced, through the intake port 11, in the cyclone condenser 10, in which it undergoes, by centrifugal effect, a pre-filtration which makes it possible to separate from the air flow the coarser particles, which are thus collected in the first collection tub 15.

The air which, by rising motion, exits from the discharge port 12 of the cyclone condenser 10 and contains smaller particles is introduced, by virtue of the piping 12a, in the inlet 5 of the filtration tower 3, where it is forced to pass through the filtration elements 7 until it reaches, by then purified, the outlet 6 of the filtration tower 3, so that it can be expelled into the atmosphere or be optionally reintroduced into the same environment to be treated from which it was drawn, if the outlet 6 of the filtration tower is connected to the environment to be treated.

In practice it has been found that the invention achieves the intended aim and objects, providing an apparatus for filtering oily mists that makes it possible to operate smoothly and efficiently, without requiring forced stops to restore its full functionality, and therefore is able to operate in a continuous manner by virtue of the work that the cyclone condenser performs.

Another advantage of the invention resides in that all the subsequent filtration steps performed by the filtration tower benefit from the efficient work performed upstream by the cyclone condenser, theoretically allowing lower maintenance and, therefore, a higher overall functionality.

## Claims

1. An apparatus for filtering oily mists, comprising at least one filtration stage (2) which has at least one filtration tower (3) provided with an enclosure (4) having a substantially vertical axis, provided in a lower region with an inlet (5) for the air to be filtered, which is connected to an environment to be treated and, in an upward region, an outlet (6) for the filtered air, said enclosure (4) accommodating internally a plurality of mutually superimposed filtration elements (7), means (8) being provided for the forced generation of an air flow from said inlet (5) to said outlet (6) through said filtration elements (7), wherein the apparatus comprises, upstream of said filtration stage (2), along the direction of said air flow, at least one pre-filtration stage (9) which is provided with at least one cyclone condenser (10) provided with an intake port (11), which communicates with the environment to be treated, and with a discharge port (12) connected to said inlet (5) **characterized in that** said enclosure (4) supports externally said cyclone condenser (10) wherein a second tub (16) for the collection of the liquid separated from the air to be treated is located on the bottom of said filtration tower (3) and wherein the means (8) for the forced generation of an air flow comprises an extractor (8a) which communicates with said outlet (6) of said filtration tower (3) and is driven by an adapted motor (8b) supported by said enclosure (4) of said filtration tower (3) wherein said cyclone condenser (10) has a hollow cylindrical body (10a), with a substantially vertical axis, which communicates in a lower region with a conical portion (10b) with walls that converge downward, said intake port (11) being arranged tangentially to and above said cylindrical body (10a), said discharge port (12) being arranged upward and axially to said cylindrical body (10a), at the lower end of said conical portion (10b) there being a discharge outlet (14) for the liquids separated from the air to be treated which communicates with a first collection tub (15).

2. The apparatus according to claim 1, **characterized in that** said cyclone condenser (10) has, at least on the internal lateral wall of said cylindrical body (10a), at least one relief or recessed region (17) which unwinds in a spiral shape around the axis of said cylindrical body (10a).

3. The apparatus according to one or more of the preceding claims, **characterized in that** said cyclone condenser (10) is provided internally with barrier means (19) adapted to limit the rise of particles toward said discharge port (12).

4. The apparatus according to one or more of the preceding claims, **characterized in that** said cyclone condenser (10) is provided internally with means for interrupting the continuity of pressure at least between the upper part and the lower part of said cyclone condenser (10).

## Patentansprüche

1. Eine Vorrichtung zur Filtrierung von Ölnebel, die mindestens eine Filtrierstufe (2) umfasst, welche mindestens einen Filtrationsturm (3) hat, ausgestattet mit einem Gehäuse (4), das eine im Wesentlichen vertikale Achse hat, in einem unteren Bereich ausgestattet mit einem Einlass (5) für die zu filternde Luft, der mit einer zu behandelnden Umgebung in Verbindung steht; und in einem oberen Bereich mit einem Auslass (6) für die gefilterte Luft; wobei das Gehäuse (4) in seinem Inneren eine Vielzahl übereinander angeordneter Filtrationselemente (7) enthält; wobei Mittel (8) für die erzwungene Erzeugung eines Luftstroms von dem Einlass (5) zu dem Auslass (6) durch die Filtrationselemente (7) bereitgestellt sind; wobei die Vorrichtung, stromaufwärts von der Filtrierstufe (2), entlang der Richtung des Luftstroms, mindestens eine Vorfiltrierstufe (9) umfasst, die mit mindestens einem Zyklonkondensator (10) ausgestattet ist, der mit einer Einlassöffnung (11) versehen ist, welche mit der zu behandelnden Umgebung in Austausch steht, und mit einer Ablassöffnung (12), die mit dem Einlass (5) verbunden ist; **dadurch gekennzeichnet, dass** das Gehäuse (4) außen den Zyklonkondensator (10) trägt, wobei ein zweiter Trog (16) zum Sammeln der Flüssigkeit, die von der zu behandelnden Luft getrennt wurde, sich am Boden des Filtrationsturms (3) befindet und wobei das Mittel (8) für die erzwungene Erzeugung eines Luftstroms ein Sauggebläse (8a) umfasst, das mit dem Auslass (6) des Filtrationsturms (3) kommuniziert und von einem geeigneten Motor (8b) angetrieben ist, der von dem Gehäuse (4) des Filtrationsturms (3) getragen ist; wobei der Zyklonkondensator (10) einen zylindrischen Hohlkörper (10a) mit im Wesentlichen vertikaler Achse hat, welcher in einem unteren Bereich mit einem kegelförmigen Abschnitt (10b) mit Wänden in Austausch steht, die nach unten zusammenlaufen; wobei die Einlassöffnung (11) tangential zu und oberhalb des zylindrischen Körpers (10a) angeordnet ist, wobei die Ablassöffnung (12) oberhalb von und axial zu dem zylindrischen Körper (10a) angeordnet ist, wobei sich am unteren Ende des kegelförmigen Abschnitts (10b) ein Ablassauslass (14) für die Flüssigkeiten befindet, die von der zu behandelnden Luft getrennt wurden, welcher mit einem ersten Sammeltrog (15) kommuniziert.

2. Die Vorrichtung gemäß Anspruch 1, **dadurch gekennzeichnet, dass** der Zyklonkondensator (10) mindestens an der inneren Seitenwand des zylindrischen Körpers (10a) mindestens ein Relief oder einen vertieften Bereich (17) hat, welcher spiralförmig um die Achse des zylindrischen Körpers (10a) verläuft.

3. Die Vorrichtung gemäß einem oder mehreren der obigen Ansprüche, **dadurch gekennzeichnet, dass** der Zyklonkondensator (10) innen mit Barrieremitteln (19) ausgestattet ist, die ausgebildet sind, um den Anstieg von Partikeln zu der Ablassöffnung (12) zu begrenzen.

4. Die Vorrichtung gemäß einem oder mehreren der obigen Ansprüche, **dadurch gekennzeichnet, dass** der Zyklonkondensator (10) innen mit Mitteln zur Unterbrechung der Kontinuität des Drucks mindestens zwischen dem oberen Teil und dem unteren Teil des Zyklonkondensators (10) ausgestattet ist.

## Revendications

1. Appareil pour filtrer des brouillards d'huile, comprenant au moins un étage de filtration (2) qui a au moins une tour de filtration (3) prévue avec une enceinte (4) ayant un axe sensiblement vertical, prévue dans une région inférieure avec une entrée (5) pour l'air à filtrer, qui est raccordée à un environnement à traiter, et dans une région supérieure, une sortie (6) pour l'air filtré, ladite enceinte (4) logeant intérieurement une pluralité d'éléments de filtration (7) mutuellement superposés, un moyen (8) étant prévu pour la génération forcée d'un flux d'air de ladite entrée (5) à ladite sortie (6) à travers lesdits éléments de filtration (7), dans lequel l'appareil comprend, en amont dudit étage de filtration (2), le long de la direction dudit flux d'air, au moins un étage de préfiltration (9) qui est prévu avec au moins un condenseur cyclonique (10) prévu avec un orifice d'admission (11) qui communique avec l'environnement à traiter et avec un orifice de décharge (12) raccordé à ladite entrée (5), **caractérisé en ce que** ladite enceinte (4) supporte extérieurement ledit condenseur cyclonique (10), dans lequel une seconde cuve (16) pour la collecte du liquide séparé de l'air à traiter est positionnée au fond de ladite tour de filtration (3) et dans lequel le moyen (8) pour la génération forcée d'un flux d'air comprend un extracteur (8a) qui communique avec ladite sortie (6) de ladite tour de filtration (3) et est entraîné par un moteur (8b) adapté supporté par ladite enceinte (4) de ladite tour de filtration (3), dans lequel ledit condenseur cyclonique (10) a un corps cylindrique creux (10a) avec un axe sensiblement vertical, qui communique dans une région inférieure avec une partie conique (10b) avec des parois qui convergent vers le bas, ledit orifice d'admission (11) étant agencé de manière tangentielle sur et au-dessus dudit corps cylindrique (10a), ledit orifice de décharge (12) étant agencé vers le haut et axialement par rapport audit corps cylindrique (10a), au niveau de l'extrémité inférieure de ladite partie conique (10b), on trouve une sortie de décharge (14) pour les liquides séparés de l'air à traiter qui communique avec une première cuve de collecte (15).

2. Appareil selon la revendication 1, **caractérisé en ce que** ledit condensateur cyclonique (10) a, au moins sur la paroi latérale interne dudit corps cylindrique (10a), au moins un relief ou région évidée (17) qui se déroule dans une forme de spirale autour de l'axe dudit corps cylindrique (10a).

3. Appareil selon une ou plusieurs des revendications précédentes, **caractérisé en ce que** ledit condenseur cyclonique (10) est prévu intérieurement avec un moyen de barrière (19) adapté pour limiter la montée des particules vers ledit orifice de décharge (12).

4. Appareil selon une ou plusieurs des revendications précédentes, **caractérisé en ce que** ledit condenseur cyclonique (10) est prévu intérieurement avec un moyen pour interrompre la continuité de pression au moins entre la partie supérieure et la partie inférieure dudit condenseur cyclonique (10).
